# EUROPEAN PATENT APPLICATION

(11) **EP 3 654 256 A1**
(43) Date of publication of application: **20.05.2020**
(21) Application number: 18831548.5
(22) Date of filing: 06.07.2018
(51) Int. Cl.: G06Q 10/08, B65G 61/00

(54) **LOGISTICS MANAGEMENT SYSTEM AND LOGISTICS MANAGEMENT METHOD**

(30) Priority: 14.07.2017 JP 2017138437
(71) Applicant: Sony Interactive Entertainment Inc., Tokyo 108-0075 (JP)
(72) Inventor: TANABE, Taku, Tokyo 108-0075 (JP); TASAKI, Hideo, Tokyo 108-0075 (JP); HAYASHI, Hirosato, Tokyo 108-0075 (JP); YAMAOKA, Naohiro, Tokyo 108-0075 (JP)
(74) Representative: D Young & Co LLP
(86) International application number: PCT/JP2018/025682
(87) International publication number: WO 2019/013123

(57) **Abstract**

The objective of the present invention is to provide a logistics management system and a logistics management method capable of simply and rapidly acquiring information verifying a delivery fact of a load and storing the information. Provided is a logistics management system including: first receiving means receiving, from a first terminal, identification information of a load acquired by the first terminal and first position information indicating a position of the first terminal; second receiving means receiving, from a second terminal, identification information of the load acquired by the second terminal and second position information indicating a position of the second terminal; determining means determining presence or absence of a delivery fact of the load on the basis of the first position information and the second position information in a case in which the identification information of the load received from the first terminal and the identification information of the load received from the second terminal agree with each other; and determination result storing means storing a result of the determination performed by the determining means.

## Description

### [Technical Field]

The present invention relates to a logistics management system and a logistics management method.

### [Background Art]

In recent years, a logistics management system using information communication technology widely becomes popular. Data of primary pickup and delivery events such as a pickup from a sender, an arrival of a load to a delivery base, and a delivery to a receiver is registered as needed in computers on the Internet by using pickup and delivery terminals. The sender and receiver can access data on the Internet and confirm a current position of a load substantially in real time.

### [Summary]

### [Technical Problem]

Meanwhile, with regard to a delivery fact of a load from a sender to a logistics company or a delivery fact of a load from a logistics company to a receiver, verification thereof is performed through signs or deliveries of sealed papers similarly to a conventional case. Specifically, in dispatch, the sender delivers a load to the logistics company and the sender receives a paper signed or sealed for a reception confirmation by the logistics company. Similarly in a case in which the load is delivered from the logistics company to the receiver, the logistics company receives a paper signed or sealed for a reception confirmation by the receiver. Therefore, if it is possible to acquire information verifying the above delivery fact more simply and rapidly and store the information by using the information communication technology, this is extremely significant.

The present invention has been made in view of such circumstances and the objective of the present invention is to provide a logistics management system and a logistics management method capable of simply and rapidly acquiring information verifying a delivery fact of a load and storing the information.

### [Solution to Problem]

A logistics management system according to one aspect of the present invention includes: first receiving means receiving, from a first terminal, identification information of a load acquired by the first terminal and first position information indicating a position of the first terminal; second receiving means receiving, from a second terminal, identification information of the load acquired by the second terminal and second position information indicating a position of the second terminal; determining means determining presence or absence of a delivery fact of the load on a basis of the first position information and the second position information in a case in which the identification information of the load received from the first terminal and the identification information of the load received from the second terminal agree with each other; and determination result storing means storing a result of the determination performed by the determining means.

A logistics management method according to another aspect of the present invention includes: a step of receiving, from a first terminal, identification information of a load acquired by the first terminal and first position information indicating a position of the first terminal; a step of receiving, from a second terminal, identification information of the load acquired by the second terminal and second position information indicating a position of the second terminal; a step of determining presence or absence of a delivery fact of the load on a basis of the first position information and the second position information in a case in which the identification information of the load received from the first terminal and the identification information of the load received from the second terminal agree with each other; and a step of storing the presence or absence of the delivery fact of the load in storing means.

Here, the determining means may determine that the delivery fact of the load is present in a case in which a distance between the position of the first terminal and the position of the second terminal is less than a predetermined distance.

Further, the determining means may determine that the delivery fact of the load is present in a case in which the distance between the position of the first terminal and the position of the second terminal is less than the predetermined distance and an elapsed time after the first position information is received until the second position information is received is less than a predetermined time.

The predetermined distance may be set for each facility in which the second terminal is used.

According to one mode of the present invention, the first terminal is used by a sender of the load, and the second terminal is used by a logistics company. The logistics management system further includes storing means previously storing identification information of the logistics company in an associated manner with the identification information of the load. The second receiving means further receives the identification information of the logistics company, and the determining means further determines validity of handling of the load on a basis of whether or not the identification information of the logistics company received by the second receiving means and the identification information of the logistics company previously stored in an associated manner with the identification information of the load agree with each other.

According to another mode of the present invention, the first terminal is used by a logistics company, the second terminal is used by a receiver of the load. The logistics management system further includes storing means previously storing identification information of the receiver of the load in an associated manner with the identification information of the load. The second receiving means further receives the identification information of the receiver, and the determining means further determines validity of handling of the load on a basis of whether or not the identification information of the receiver received by the second receiving means and the identification information of the receiver previously stored in an associated manner with the identification information of the load agree with each other.

According to still another mode of the present invention, the first terminal is used by a logistics company, the second terminal is used by a receiver of the load. The logistics management system further includes storing means previously storing a reception place of the load in an associated manner with the identification information of the load. The determining means further determines validity of handling of the load on a basis of the second position information received by the second receiving means and the reception place of the load previously stored in an associated manner with the identification information of the load.

The logistics management system may further include means requesting the second terminal to transmit position information of the second terminal in a case in which the first position information is received.

Further, in a case in which a distance between the position of the first terminal and the position of the second terminal is equal to or more than a predetermined distance, a predetermined message may be transmitted.

Further, the first terminal may acquire the identification information of the load from a code image indicated on the load, photographed by photographing means.

Further, the second terminal may acquire the identification information of the load from a code image indicated on the load, photographed by photographing means.

### [Brief Description of Drawings]

[FIG. 1] FIG. 1 is an entire constitution diagram illustrating a logistics management system according to an embodiment of the present invention.
[FIG. 2] FIG. 2 is a diagram illustrating one example of a code image attached to a load.
[FIG. 3] FIG. 3 is a diagram schematically illustrating contents of a load database retained by a management server.
[FIG. 4] FIG. 4 is a diagram schematically illustrating contents of a load database retained by a component supplier server.
[FIG. 5] FIG. 5 is a diagram schematically illustrating contents of an enterprise position database retained by the management server.
[FIG. 6] FIG. 6 is a diagram schematically illustrating contents of a pickup database retained by the management server.
[FIG. 7] FIG. 7 is a diagram schematically illustrating contents of a delivery database retained by the management server.
[FIG. 8] FIG. 8 is a sequence diagram illustrating dispatch registration processing.
[FIG. 9] FIG. 9 is a sequence diagram illustrating pickup processing.
[FIG. 10] FIG. 10 is a sequence diagram illustrating a former stage (arrival) of delivery processing.
[FIG. 11] FIG. 11 is a sequence diagram illustrating a latter stage (reception) of the delivery processing.

### [Description of Embodiment]

Hereinafter, an embodiment of the present invention will be described in detail with reference to the accompanying drawings.

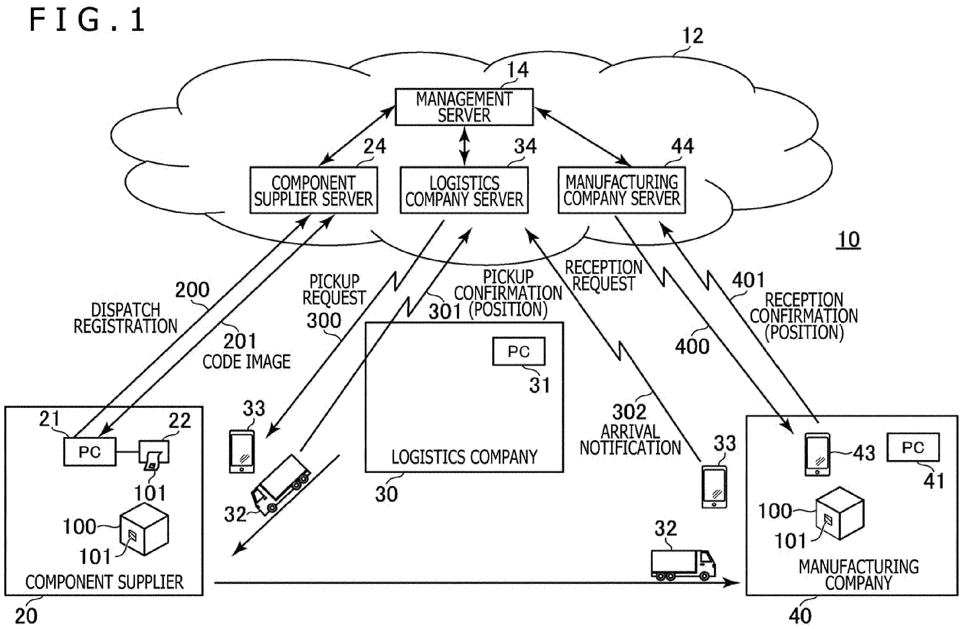

FIG. 1 is an entire constitution diagram illustrating a logistics management system according to an embodiment of the present invention. The logistics management system 10 is established by using an information communication network. Further, the logistics management system 10 is used by a component supplier 20 that is one example of a sender of a load 100, a manufacturing company 40 that is one example of a receiver, and a logistics company 30 that is one example of a deliverer. In the following descriptions, the sender, the receiver, and the deliverer are each an enterprise; however, one or more of the above may be an individual. Here, the load 100 including electronic components is picked up by an employee of the logistics company 30 on the premises or in the vicinity of the premises of the component supplier 20. Further, a delivery vehicle 32 carries the load 100 to the premises or the vicinity of the premises of the manufacturing company 40. Then, an employee of the manufacturing company 40 receives the load 100 and uses it to manufacture electronics, for example.

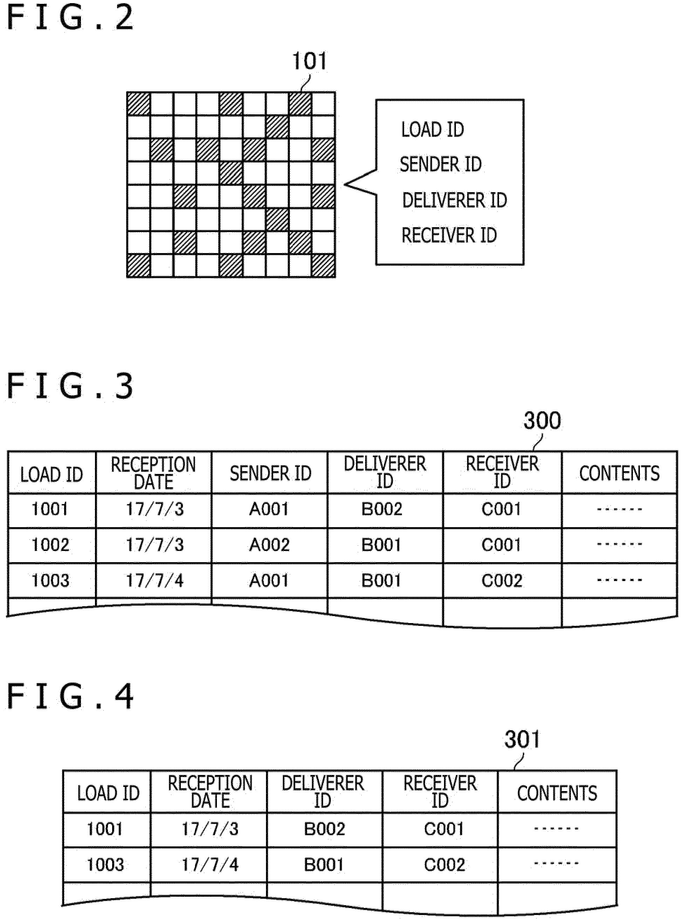

The component supplier 20 includes a component supplier personal computer (PC) 21 used for logistics management. A label printer 22 is connected to the component supplier PC 21. Further, before dispatch, a code label 101 printed by the label printer 22 is attached to the load 100 in which an electronic component as contents is packed. The code label 101 indicates a two-dimensional code image as exemplified in FIG. 2. Further, a load identifier (ID) for identifying the load 100, a sender ID that is an ID of the component supplier 20 as a sender, a deliverer ID that is an ID of the logistics company 30 as a deliverer, and a receiver ID that is an ID of the manufacturing company 40 as a receiver are encoded in the image. Note that a method for adding the above information to the load 100 is not limited to the two-dimensional code image but may be a one-dimensional code image. In addition, other recording method such as an electromagnetic recording method using a radio frequency (RF) tag etc. may be used.

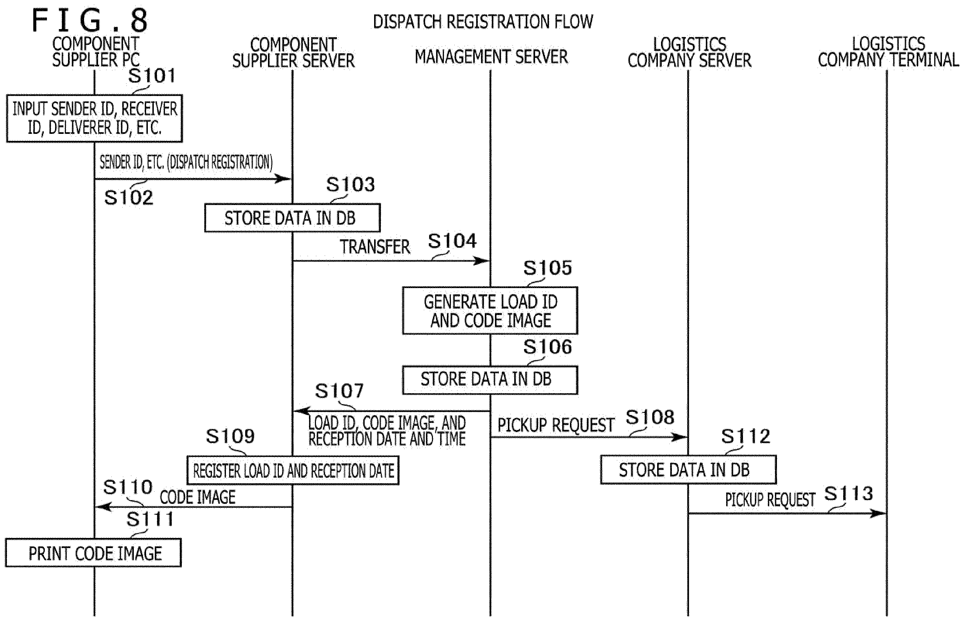

The component supplier PC 21 can communicate with a component supplier server 24 that is a server computer provided on the Internet 12. In addition, the component supplier server 24 can communicate with a management server 14 that is a server computer similarly provided on the Internet 12. Before dispatching the load 100, the component supplier PC 21, the component supplier server 24, and the management server 14 execute dispatch registration processing (FIG. 8). In the dispatch registration processing, registration of information regarding the sender, the receiver, the deliverer, or the like of the load 100 is performed in the component supplier server 24 and the management server 14 (reference sign 200). When the dispatch registration processing is executed, data of a code image for printing the above-described code label 101 is transmitted from the management server 14 to the component supplier PC 21 via the component supplier server 24 (reference sign 201). Further, a pickup request is transmitted from the management server 14 to a logistics company terminal 33 used by an employee of the logistics company 30 via a logistics company server 34 (reference sign 300).

The logistics company 30 includes a logistics company PC 31 used for the logistics management. Further, the employee of the logistics company 30 carries the logistics company terminal 33. The logistics company terminal 33 is portable information communication equipment and includes a reading device of the code label 101, positioning means for specifying the position of the logistics company terminal 33, a communication device, and a computer. For example, the logistics company terminal 33 may be constituted by a smartphone and, in that case, a built-in camera is used as a reading device. The positioning means may be a global positioning system (GPS) receiver that specifies its own position by using a satellite signal of the GPS, for example. Alternatively, the positioning means may be constituted by a communication device that receives a wireless signal from a mobile-phone base station or a wireless local area network (LAN) router, or a processing apparatus that calculates its own position by the wireless signal.

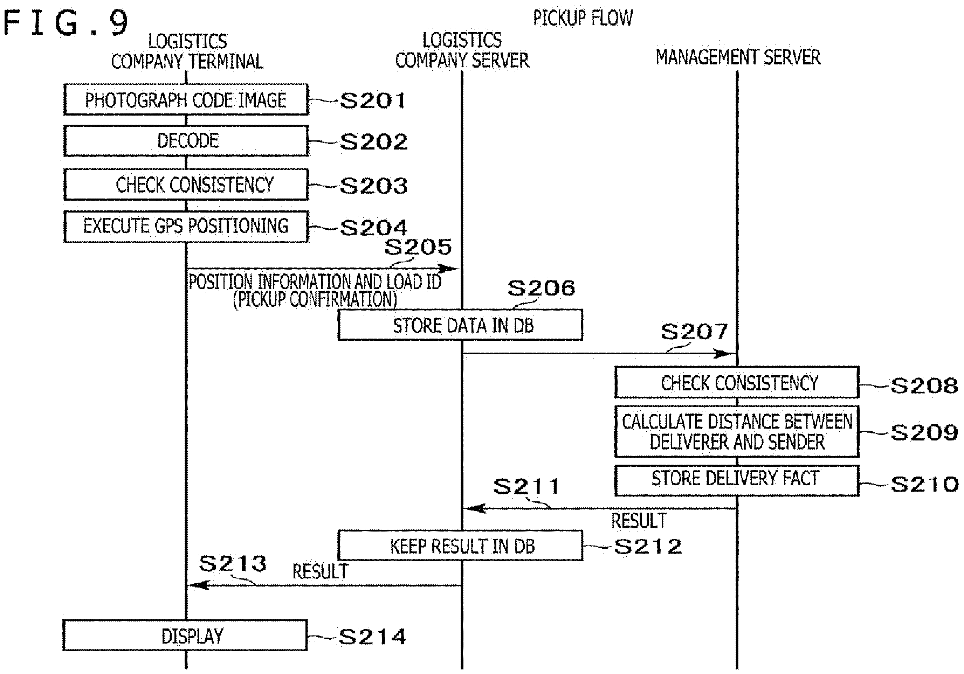

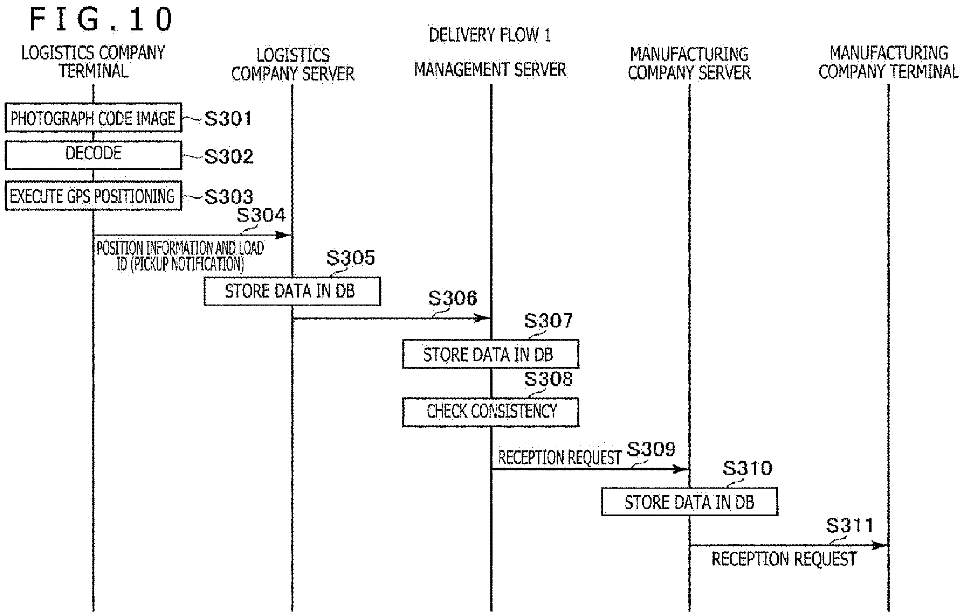

The logistics company PC 31 and the logistics company terminal 33 can each communicate with the logistics company server 34 that is a server computer provided on the Internet 12. Further, the logistics company server 34 can communicate with the management server 14. When picking up the load 100, the logistics company terminal 33, the logistics company server 34, and the management server 14 execute pickup processing (FIG. 9). Further, when the load 100 is delivered to the receiver, the logistics company terminal 33, the logistics company server 34, and the management server 14 execute delivery processing (FIG. 10).

In the pickup processing, when arriving at a place of the component supplier 20, the employee of the logistics company 30 photographs the code label 101 attached to the load 100 by using the built-in camera of the logistics company terminal 33. Further, the logistics company terminal 33 measures the position of the logistics company terminal 33 at the timing at which the code label 101 is photographed and generates position information (e.g., a pair of latitude and longitude). Then, the logistics company terminal 33 transmits the load ID and position information decoded from the code label 101 to the logistics company server 34 and the management server 14 (reference sign 301). At this time, the management server 14 determines validity of handling of the load 100 and records a determination result thereof in a database. The validity of handling of the load 100 includes information regarding whether or not the load 100 is received by a desired deliverer, for example. The management server 14 further determines presence or absence of a delivery fact of the load 100 by the logistics company 30 and records a result thereof in the database.

In the delivery processing, when the delivery vehicle 32 of the logistics company 30 reaches the premises or the vicinity of the premises of the manufacturing company 40, the employee of the logistics company 30 photographs the code label 101 attached to the load 100 by using the built-in camera of the logistics company terminal 33. Further, the logistics company terminal 33 measures the position of the logistics company terminal 33 at the timing at which the code label 101 is photographed and generates position information. Then, the logistics company terminal 33 transmits an arrival notification including the load ID and position information decoded from the code label 101 to the logistics company server 34 and the management server 14 (reference sign 302). Thereby, a reception request is transmitted from the management server 14 to a manufacturing company terminal 43 used by the employee of the manufacturing company 40 via a manufacturing company server 44 (reference sign 400).

The manufacturing company 40 includes a manufacturing company PC 41 used for the logistics management. Further, the employee of the manufacturing company 40 carries the manufacturing company terminal 43. The manufacturing company terminal 43 is portable information communication equipment similar to that of the logistics company terminal 33 and includes a reading device of the code label 101, positioning means for specifying the position of the manufacturing company terminal 43, a communication device, and a computer. For example, the manufacturing company terminal 43 may be constituted by a smartphone and, in that case, a built-in camera is used as the reading device. The positioning means may be a GPS receiver that specifies its own position by using a satellite signal of the GPS, for example. Alternatively, the positioning means may be constituted by a communication device that receives a wireless signal from a mobile-phone base station or a wireless LAN router, or a processing apparatus that calculates its own position by the wireless signal.

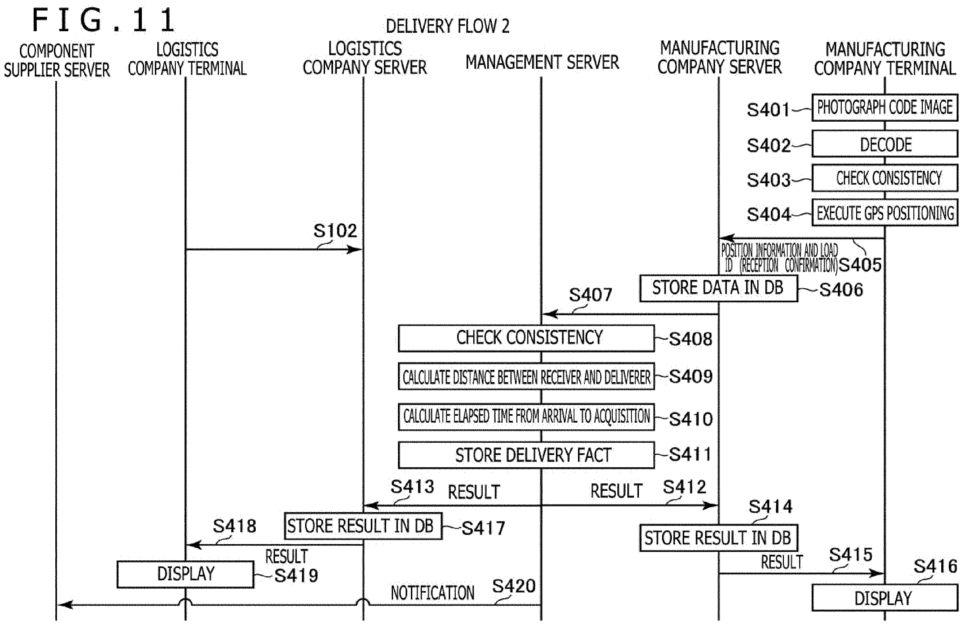

The manufacturing company PC 41 and the manufacturing company terminal 43 can each communicate with the manufacturing company server 44 that is a server computer provided on the Internet 12. Further, the manufacturing company server 44 can communicate with the management server 14. When receiving the load 100, the logistics company terminal 33, the logistics company server 34, and the management server 14 execute the delivery processing (FIG. 11).

In the delivery processing, the employee of the manufacturing company 40 photographs the code label 101 attached to the load 100 by using the built-in camera of the manufacturing company terminal 43. Further, the manufacturing company terminal 43 measures the position of the manufacturing company terminal 43 at the timing at which the code label 101 is photographed and generates position information. Then, the manufacturing company terminal 43 transmits a reception confirmation including the load ID and position information decoded from the code label 101 to the manufacturing company server 34 and the management server 14 (reference sign 401).

At this time, the management server 14 determines the validity of handling of the load 100 and records a determination result thereof in the database. The validity of handling of the load 100 includes information regarding whether or not the load 100 is received by a desired receiver, for example. Further, the management server 14 further determines the presence or absence of a delivery fact of the load 100 from the logistics company 30 to the manufacturing company 40 and records a determination result thereof in the database.

Hereinafter, information processing in the logistics management system 10 will be further described in detail. First, various databases retained by the logistics management system 10 will be described with reference to FIGS. 3 to 7.

FIG. 3 is a diagram schematically illustrating contents of a load database retained by the management server 14. A load database 300 illustrated in FIG. 3 stores a reception date, a sender ID, a deliverer ID, a receiver ID, and contents, associating them with the load ID.
The sender ID, the deliverer ID, the receiver ID, and the contents are data input by the component supplier PC 21. The contents indicate contents of the load 100. The reception date is the date on which the above data is registered in the component supplier server 24 or the management server 14.

FIG. 4 schematically illustrates contents of a load database retained by the component supplier server 24. This load database 301 is a subset of the load database 300 illustrated in FIG. 3. Further, the load database 301 stores the reception date, the deliverer ID, the receiver ID, and the contents, associating them with the load ID.

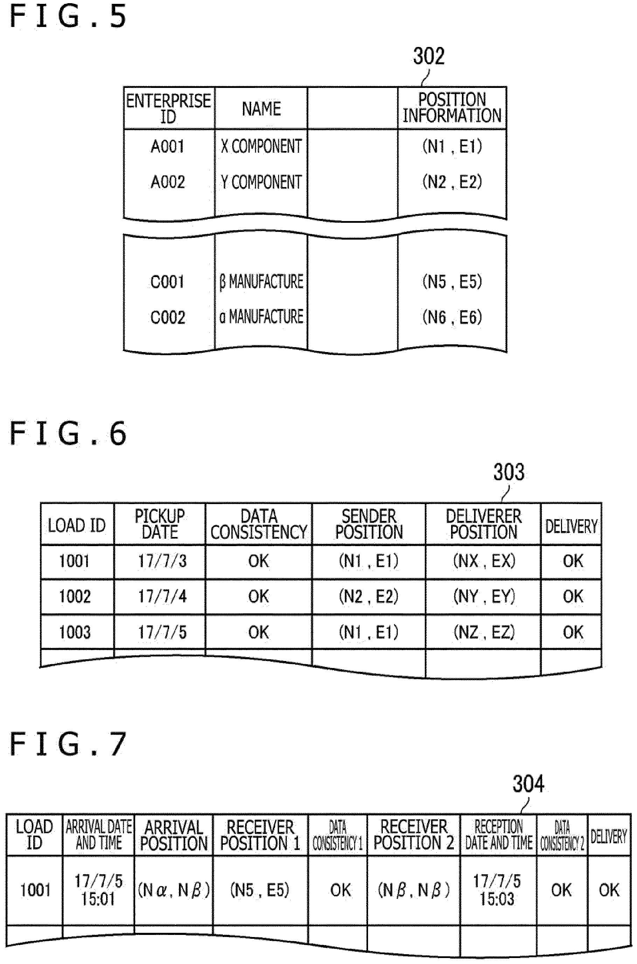

FIG. 5 is a diagram schematically illustrating contents of an enterprise position database retained by the management server 14. An enterprise position database 302 is previously built up by the management server 14 and stores position information regarding a place at which a delivery of the load 100 occurs. Specifically, the enterprise position database 302 stores a name and position information of an enterprise as a sender or a receiver, associating them with identification information of the enterprise. The position information indicates a position of the center of the premises of each enterprise or a position of a delivery place of loads in each enterprise. The identification information regarding the enterprises stored in the enterprise position database 302 is the same as the information used as the above-described sender ID or receiver ID. The management server 14 can immediately acquire position information regarding the sender or the receiver from the sender ID or the receiver ID by using this enterprise position database 302.

FIG. 6 is a diagram schematically illustrating contents of a pickup database retained by the management server 14. A pickup database 303 records the validity of a delivery of a load at the pickup and the presence or absence of the delivery fact. As illustrated in FIG. 6, the pickup database 303 stores data consistency, sender position, deliverer position, and the presence or absence of the delivery fact, associating them with the load ID. The data consistency indicates the validity of a delivery of a load at the time of picking up the load. Specifically, the data consistency indicates whether or not the logistics company terminal 33 that transmits the pickup confirmation (reference sign 301) belongs to an enterprise of the deliverer ID associated with the load ID in the load database 300. More specifically, when the pickup confirmation is transmitted from the logistics company server 34, the management server 14 acquires an ID of the logistics company server 34 (i.e., the ID of the logistics company 30). Further, the management server 14 determines whether or not the ID agrees with the deliverer ID (here, the ID of the logistics company 30) associated with the load ID in the load database 300. If the determination is negative, it can be determined that the load 100 is received by another deliverer (an enterprise or individual other than the logistics company 30) by mistake.

The sender position is position information regarding the sender. The sender ID associated with the load ID in the load database 300 is acquired and further the position information associated with the sender ID in the enterprise position database 302 is acquired, whereby the sender position is specified. The deliverer position is position information transmitted from the logistics company terminal 33 at the time of pickup. When a distance from the sender position to the deliverer position is less than a predetermined distance, it is determined that the delivery fact is present and this is recorded in the pickup database 303.

Generally, when a sender such as the component supplier 20 is present in the heart of a city, the premises are narrow and the premises of other enterprises are present closely in the surroundings. By contrast, when the sender is present outside the city, the premises are broad and the premises of other enterprises are not present closely in the surroundings. Therefore, the "predetermined distance" used when determining the presence or absence of the reception fact may be set in advance for each enterprise of the sender. For example, when the premises of a certain enterprise are broad and the premises of other enterprises are not present closely in the surroundings, a relatively large value is set as the "predetermined distance" for the enterprise.

Note that, in determining the presence or absence of the delivery fact, other than the determination using the distance between the sender position and the deliverer position, other determinations may be adopted such as determination whether or not both of the positions are present in the same geographic block (administrative section, etc.) or the like.

When the distance from the sender position to the deliverer position is equal to or more than the predetermined distance, it is determined that the delivery fact is absent and this is recorded in the pickup database 303. Note that, in this case, on the basis of the sender ID, the deliverer ID, and the receiver ID associated with the load ID, a report message may be transmitted, for example, in an e-mail format to computers such as the component supplier PC 31, the logistics company PC 31, and the manufacturing company PC 41.

FIG. 7 is a diagram schematically illustrating contents of a delivery database retained by the management server 14. A delivery database 304 records the validity of delivery of a load at the time of delivering the load and the presence or absence of the delivery fact. As illustrated in FIG. 7, the delivery database 304 stores arrival date and time, an arrival position, a receiver position 1, data consistency 1, a receiver position 2, reception date and time, data consistency 2, and the presence or absence of the delivery fact, associating them with the load ID. The arrival date and time is date and time at which the management server 14 or the logistics company server 34 receives an arrival notification (reference sign 302). The arrival position is position information regarding the logistics company terminal 33 included in the arrival notification. The receiver position 1 is position information regarding the receiver ID associated with the load ID and is acquired from the enterprise position database 302. The data consistency 1 indicates the validity of arrival of a load. Specifically, when a distance between the arrival position and the receiver position 1 is less than a predetermined distance, it is determined that the validity is present. The "predetermined distance" may also be set in advance for each enterprise as the receiver. Further, other than a determination using the distance between the arrival position and the receiver position 1, other determinations may be adopted such as a determination whether or not both of the positions are present in the same geographic block (administrative section, etc.) or the like.

The receiver position 2 is position information included in the reception confirmation (reference sign 401). The reception date and time is date and time at which the reception confirmation is received by the manufacturing company server 44 or the management server 14. The data consistency 2 indicates the validity for receiving the load. Specifically, the data consistency 2 indicates whether or not the manufacturing company terminal 43 that has transmitted the reception confirmation (reference sign 401) belongs to the enterprise having the receiver ID associated with the load ID in the load database 300. More specifically, when the reception confirmation is transmitted from the manufacturing company server 44, the management server 14 acquires the ID of the manufacturing company server 44 (manufacturing company ID) and determines whether or not this ID agrees with the receiver ID associated with the load ID in the load database 300. If the determination is negative, it can be determined that the load 100 is received by another receiver by mistake.

The presence or absence of the delivery fact of the load 100 from the logistics company 30 as a deliverer to the manufacturing company 40 as a receiver is determined on the basis of a distance between the arrival position and the receiver position 2 and an elapsed time from the arrival date and time to the reception date and time. Specifically, when the distance between the arrival position and the receiver position 2 is less than a predetermined distance and the elapsed time from the arrival date and time to the reception date and time is less than a predetermined time, it is determined that the delivery fact is present. Also, here, the "predetermined distance" may be set in advance for each enterprise as a receiver such as the manufacturing company 40. Further, other than a determination using the distance between the arrival position and the receiver position 2, other determinations may be adopted such as a determination whether or not both of the positions are present in the same geographic block (administrative section, etc.) or the like. Further, the presence or absence of the delivery fact may be determined only depending on whether or not the arrival position and the receiver position 2 satisfy predetermined conditions, without setting the elapsed time from the arrival date and time to the reception date and time as conditions.

The presence or absence of the delivery fact is recorded in the delivery database 304. Note that in a case in which it is determined that the delivery fact is absent, a report message, for example, in an e-mail format may be transmitted to computers such as the component supplier PC 31, the logistics company PC 31, and the manufacturing company PC 41 on the basis of the sender ID, the deliverer ID, and the receiver ID associated with the load ID.

FIG. 8 is a sequence diagram illustrating the dispatch registration processing. As illustrated in FIG. 8, in a case in which a load is to be dispatched, the ID of the sender (here, the ID of the component supplier 20), the ID of the receiver (here, the ID of the manufacturing company 40), the ID of the deliverer (here, the ID of the logistics company 30) of the load to be dispatched, and contents of the load are first input by using the component supplier PC 21 (S101). The above data is transmitted from the component supplier PC 21 to the component supplier server 24 (S102). The component supplier server 24 stores the received data in the load database 301 (FIG. 4) managed by the component supplier server 24 (S103) and transfers the data to the management server 14 (S104). The management server 14 generates an ID and a code image (refer to FIG. 2) for the load (S105). Further, the management server 14 sets the current date as the reception date and registers the data in the load database 300 (FIG. 3) (S106).

Next, the management server 14 transmits the load ID, the code image, and the reception date to the component supplier server 24 (S107) and transmits a pickup request to the logistics company server 34 (S108). The component supplier server 24 additionally registers the load ID and the reception date in the load database 301 (S109) and transmits the code image to the component supplier PC 21 (S110). The component supplier PC 21 prints the received code image by using the label printer 22 and obtains the code label 101 (Sill). The code label 101 is attached to the load 100 by hand, for example, as described above.

Meanwhile, when the pickup request is received from the management server 14, the logistics company server 34 stores data included in the pickup request in an internal database (not illustrated) (SI12). Examples of the pickup request include the load ID, the sender ID, the deliverer ID, and the receiver ID. Afterwards, the logistics company server 34 selects one or more of a plurality of logistics company terminals 33 managed by the logistics company 30 and transmits the pickup request to them (SI13). In accordance with position information of employees managed by its own company, for example, the logistics company server 34 transmits the pickup request to the logistics company terminal 33 of the employee closest to the component supplier 20 as the sender. In another example, in accordance with a table of affairs in which the employees managed by its own company are in charge, the logistics company server 34 transmits the pickup request to the logistics company terminal 33 of an employee in charge of the affair with the component supplier 20 as the sender. At least, the load ID and the sender ID are included in the pickup request. On the basis of the sender ID, a name, an address, etc. of the component supplier 20 as the sender are displayed in the logistics company terminal 33. Further, in accordance with the display, the employee of the logistics company 30 visits the component supplier 20 to receive the load 100.

FIG. 9 is a sequence diagram illustrating the pickup processing. When the employee of the logistics company 30 carrying the logistics company terminal 33 visits the component supplier 20 as the sender, the employee photographs the code label 101 attached to the load 100 by using the built-in camera of the logistics company terminal 33 (S201). The logistics company terminal 33 decodes the photographed code image to acquire the load ID, the sender ID, the deliverer ID, and the receiver ID (S202), and checks the data consistency (S203). Specifically, the logistics company terminal 33 determines whether or not the load ID included in the pickup request and the decoded load ID agree with each other and whether or not the ID of its own company, that is, the logistics company 30 and the decoded deliverer ID agree with each other. If the determination is negative, the logistics company terminal 33 displays an error, and the processing is suspended, for example. If the determination is affirmative, the logistics company terminal 33 acquires information regarding the current position thereof (S204).

The logistics company terminal 33 transmits the load ID decoded in S202 and the position information acquired in S204 to the logistics company server 34 (S205). The logistics company server 34 stores the load reception date and the like in the internal database in an associated manner with the load ID (S206).

The logistics company server 34 transfers the current position information of the logistics company terminal 33 and the load ID to the management server 14 (S207). Further, the management server 14 registers the received data in the pickup database 303 illustrated in FIG. 6. Then, the management server 14 checks the data consistency (S208). Specifically, the management server 14 determines whether or not the deliverer ID stored in the load database 300 in association with the load ID received from the logistics company server 34 agrees with the ID of the logistics company server 34 (i.e., the ID of the logistics company 30). The determination result is registered in the pickup database 303. If the determination is negative, the management server 14 may transmit a report message, for example, in an e-mail format to computers such as the component supplier PC 31, the logistics company PC 31, and the manufacturing company PC 41 on the basis of the sender ID, the deliverer ID, and the receiver ID associated with the load ID.

Subsequently, the management server 14 acquires the position information associated with the sender ID from the company position database 302 (FIG. 5), calculates a distance between a position indicated by the acquired position information and a position indicated by the position information transmitted from the logistics company terminal 33, and determines whether or not the distance is less than a predetermined distance (S209). Whether or not the distance is less than the predetermined distance is registered in the pickup database 303 as the presence or absence of the delivery fact (S210). Note that when the calculated distance is equal to or more than the predetermined distance, the management server 14 may transmit a report message, for example, in an e-mail format to computers such as the component supplier PC 31, the logistics company PC 31, and the manufacturing company PC 41 on the basis of the sender ID, the deliverer ID, and the receiver ID associated with the load ID.

Afterwards, the presence or absence of the delivery fact is transmitted from the management server 14 to the logistics company server 34 (S211) and registered in the internal database in an associated manner with the load ID (S212). The presence or absence of the delivery fact is further transmitted to also the logistics company terminal 33 (S213) and is displayed on a screen of the logistics company terminal 33 (S214). As described above, the employee of the logistics company 30 in charge of the pickup can confirm, on the screen of the logistics company terminal 33, that the reception of the load 100 is registered in the management server 14.

FIGS. 10 and 11 are sequence diagrams illustrating the delivery processing. First, as illustrated in FIG. 10, when the load 100 is delivered to the manufacturing company 40 as a receiver, the employee of the logistics company 30 photographs the code image of the load 100 by using the built-in camera of the logistics company terminal 33 (S301). The logistics company terminal 33 decodes the photographed code image to acquire the load ID, the sender ID, the deliverer ID, and the receiver ID (S302). Further, the logistics company terminal 33 acquires the current position information thereof by using the positioning function thereof (S303).
The logistics company terminal 33 transmits the load ID decoded in S302 and the position information acquired in S303 to the logistics company server 34 (S304). Then, the logistics company server 34 stores the arrival date and time, etc. in the internal database in an associated manner with the load ID (S305).

The logistics company server 34 transfers the current position information of the logistics company terminal 33 and the load ID to the management server 14 (S306). Then, the management server 14 registers the received data in the delivery database 304 illustrated in FIG. 7 (S307). At this time, the current position information of the logistics company terminal 33 is registered as the arrival position in the delivery database 304 and the current date and time are registered as the arrival date and time in the delivery database 304.

Afterwards, the management server 14 checks the data consistency (S308). Specifically, the management server 14 acquires the receiver ID stored in the load database in association with the load ID received from the logistics company server 34 and acquires the position information associated with the receiver ID from the company position database 302. Then, the management server 14 registers, as the receiver position 1, the acquired position information in the delivery database 304 and determines whether or not the distance between the arrival position and the receiver position 1 is less than a predetermined distance. A determination result thereof is registered as the data consistency 1 in the delivery database 304.

Subsequently, the management server 14 transmits an arrival notification to the manufacturing company server 44 (S309). When the arrival notification is received from the management server 14, the manufacturing company server 44 stores data included in an arrival request in the internal database (not illustrated) (S310). Examples of the arrival notification include the load ID, the sender ID, the deliverer ID, the receiver ID, and the arrival date and time. Afterwards, the manufacturing company server 44 transmits a reception request to the manufacturing company terminal 43 (S311).

Subsequently, as illustrated in FIG. 11, the employee of the manufacturing company 40 photographs the code image of the load 100 by using the built-in camera of the manufacturing company terminal 43 (S401). The manufacturing company terminal 43 decodes the photographed code image to acquire the load ID, the sender ID, the deliverer ID, and the receiver ID (S402), and checks the data consistency (S403). Specifically, the manufacturing company terminal 43 determines whether or not the load ID included in the reception request and the decoded load ID agree with each other and whether or not the ID of its own company, that is, the manufacturing company 40 and the decoded receiver ID agree with each other. If the determination is negative, the manufacturing company terminal 43 displays an error and the processing is suspended. If the determination is affirmative, the manufacturing company terminal 43 acquires the current position information of the logistics company terminal 33 (S404).

The manufacturing company terminal 43 transmits a reception confirmation including the load ID decoded in S402 and the position information acquired in S404 to the manufacturing company server 44 (S405). Then, the manufacturing company server 44 stores the reception date and time, etc. in the internal database in an associated manner with the load ID (S406). The current position information of the manufacturing company 43 and the load ID are transferred from the manufacturing company server 44 to the management server 14 (S407).

The management server 14 registers the received data in the delivery database 304. At this time, the position information included in the received data is registered as the receiver position 2 in the delivery database 304 and the current date and time are registered as the reception date and time in the delivery database 304. Afterwards, the management server 14 checks the data consistency (S408). Specifically, the management server 14 determines whether or not the receiver ID stored in the load database in association with the load ID received from the manufacturing company server 44 agrees with the ID of the manufacturing company server 44 (i.e., the ID of the manufacturing company 40). A determination result is registered as the data consistency 2 in the delivery database 304. If the determination is negative, a report message, for example, in an e-mail format may be transmitted to computers such as the component supplier PC 31, the logistics company PC 31, and the manufacturing company PC 41 on the basis of the sender ID, the deliverer ID, and the receiver ID associated with the load ID.

Subsequently, the management server 14 calculates a distance between the arrival position stored in the delivery database 304 and the receiver position 2 and determines whether or not the calculated distance is less than a predetermined distance (S409). Further, the management server 14 calculates an elapsed time from the arrival date and time to the reception date and time stored in the delivery database 304 and determines whether or not the calculated elapsed time is less than a predetermined time (S410). Then, on the basis of the determinations in S409 and S410, the management server 14 decides the presence or absence of the delivery fact and registers it in the delivery database 304 (S411).

Afterwards, the management server 14 transmits the presence or absence of the delivery fact to the manufacturing company server 44 and the logistics company server 34 (S412, S413). The manufacturing company server 44 stores the presence or absence of the delivery fact in the internal database (S414) and further transmits the presence of absence of the delivery fact to the manufacturing company terminal 43 (S415). The presence of absence of the delivery fact is displayed on the screen of the manufacturing company terminal 43 (S416). As described above, a person in charge of the reception of the load 100 can confirm, on the basis of the screen, that the reception of the load 100 is registered in the management server 14.

Also the logistics company server 34 similarly registers the presence or absence of the reception fact in the internal database (S417). The presence of absence of the reception fact is further transmitted also to the logistics company terminal 33 (S418) and is displayed also on the screen of the logistics company terminal 33 (S419). As described above, also the employee of the logistics company 30 in charge of the delivery can confirm, on the screen, that the reception of the load 100 is registered in the management server 14.

Further, on the basis of the deliverer ID associated with the load ID, the management server 14 specifies the component supplier server 24 and notifies also the component supplier server 24 of the presence or absence of the delivery fact (S420). On the basis of the notification, the component supplier 20 can execute settlement processing or the like regarding the load 100, for example.

According to the logistics management system 10 described above, at the time of pickup and delivery, the presence or absence of the delivery fact of the load 100 can be simply and rapidly determined and recorded in the pickup database and the delivery database. A pickup and delivery fact of the load 100 is distributed and stored in the management server 14, the component supplier server 24, the logistics company server 34, and the manufacturing company server 44. As far as the load 100 is correctly picked up and delivered, the distributed and stored data mutually have consistency. Therefore, contents of the pickup database and the deliver database become extremely strong objective evidence.

Note that a range of the present invention is not limited to the embodiment, but various modifications are also included in the range of the present invention. For example, the present invention is applicable not only to pickup and delivery of electronic components but also to those of every kinds of loads. In addition, the present invention is applicable to pickup and delivery of loads between individuals or between an enterprise and an individual.

## Claims

1. A logistics management system comprising:
first receiving means receiving, from a first terminal, identification information of a load acquired by the first terminal and first position information indicating a position of the first terminal;
second receiving means receiving, from a second terminal, identification information of the load acquired by the second terminal and second position information indicating a position of the second terminal;
determining means determining presence or absence of a delivery fact of the load on a basis of the first position information and the second position information in a case in which the identification information of the load received from the first terminal and the identification information of the load received from the second terminal agree with each other; and
determination result storing means storing a result of the determination performed by the determining means.

2. The logistics management system according to claim 1, wherein the determining means determines that the delivery fact of the load is present in a case in which a distance between the position of the first terminal and the position of the second terminal is less than a predetermined distance.

3. The logistics management system according to claim 2, wherein the determining means determines that the delivery fact of the load is present in a case in which the distance between the position of the first terminal and the position of the second terminal is less than the predetermined distance and an elapsed time after the first position information is received until the second position information is received is less than a predetermined time.

4. The logistics management system according to claim 2 or 3, wherein the predetermined distance is set for each facility in which the second terminal is used.

5. The logistics management system according to any one of claims 1 to 4, wherein
the first terminal is used by a sender of the load,
the second terminal is used by a logistics company,
the logistics management system further comprises storing means previously storing identification information of the logistics company in an associated manner with the identification information of the load,
the second receiving means further receives the identification information of the logistics company, and
the determining means further determines validity of handling of the load on a basis of whether or not the identification information of the logistics company received by the second receiving means and the identification information of the logistics company previously stored in an associated manner with the identification information of the load agree with each other.

6. The logistics management system according to any one of claims 1 to 4, wherein
the first terminal is used by a logistics company,
the second terminal is used by a receiver of the load,
the logistics management system further comprises storing means previously storing identification information of the receiver of the load in an associated manner with the identification information of the load,
the second receiving means further receives the identification information of the receiver, and
the determining means further determines validity of handling of the load on a basis of whether or not the identification information of the receiver received by the second receiving means and the identification information of the receiver previously stored in an associated manner with the identification information of the load agree with each other.

7. The logistics management system according to any one of claims 1 to 4, wherein
the first terminal is used by a logistics company,
the second terminal is used by a receiver of the load,
the logistics management system further comprises storing means previously storing a reception place of the load in an associated manner with the identification information of the load, and
the determining means further determines validity of handling of the load on a basis of the second position information received by the second receiving means and the reception place of the load previously stored in an associated manner with the identification information of the load.

8. The logistics management system according to any one of claims 1 to 7, further comprising: means requesting the second terminal to transmit position information of the second terminal in a case in which the first position information is received.

9. The logistics management system according to any one of claims 1 to 8, wherein in a case in which a distance between the position of the first terminal and the position of the second terminal is equal to or more than a predetermined distance, a predetermined message is transmitted.

10. The logistics management system according to any one of claims 1 to 9, wherein the first terminal includes photographing means photographing a code image indicated on the load and acquires the identification information of the load from the code image photographed by the photographing means.

11. The logistics management system according to any one of claims 1 to 10, wherein the second terminal includes photographing means photographing a code image indicated on the load and acquires the identification information of the load from the code image photographed by the photographing means.

12. The logistics management system according to claim 10 or 12, further comprising:
a printing apparatus printing the code image.

13. The logistics management system according to any one of claims 1 to 12, comprising:
the first terminal,
the first terminal including positioning means measuring a current position of the first terminal.

14. The logistics management system according to any one of claims 1 to 13, comprising:
the second terminal,
the second terminal including positioning means measuring a current position of the second terminal.

15. A logistics management method comprising:
a step of receiving, from a first terminal, identification information of a load acquired by the first terminal and first position information indicating a position of the first terminal;
a step of receiving, from a second terminal, identification information of the load acquired by the second terminal and second position information indicating a position of the second terminal;
a step of determining presence or absence of a delivery fact of the load on a basis of the first position information and the second position information in a case in which the identification information of the load received from the first terminal and the identification information of the load received from the second terminal agree with each other; and
a step of storing the presence or absence of the delivery fact of the load in storing means.
